# EUROPEAN PATENT APPLICATION

(11) **EP 3 791 767 A1**
(43) Date of publication of application: **17.03.2021**
(21) Application number: 19799081.5
(22) Date of filing: 10.07.2019
(51) Int. Cl.: A47L 15/14

(54) **WASHING APPLIANCE**

(30) Priority: 11.05.2018 CN 201810450963; 11.05.2018 CN 201810450962; 11.05.2018 CN 201820714532 U; 11.05.2018 CN 201820710865 U
(71) Applicant: Foshan Shunde Midea Washing Appliances Manufacturing Co., Ltd., Foshan, Guangdong 528311 (CN); Midea Group Co., Ltd., Foshan, Guangdong 528311 (CN)
(72) Inventor: LIU, Shanshan, Foshan Guangdong 528311 (CN); LIU, Chaopeng, Foshan Guangdong 528311 (CN)
(74) Representative: Lam, Alvin
(86) International application number: PCT/CN2019/095491
(87) International publication number: WO 2019/214755

(57) **Abstract**

A washing appliance (100), the washing appliance (100) comprising a housing (10), an air duct system (20) and a heat pump system (30). The air duct system (20) is disposed in the housing (10), and the air duct system (20) comprises air inlets (21) and air outlets (22), the air inlets (21) and the air outlets (22) being disposed on the housing (10). The heat pump system (30) comprises a compressor (31), first heat exchanger (32), throttling device (33) and second heat exchanger (34) that are successively connected so as to form a seal, wherein the first heat exchanger (32) is configured to perform heat exchange with a washing liquid of the washing appliance (100), and the second heat exchanger (34) is located in the air duct system (20). The air duct system (20) is provided with a fan (23), and the fan (23) is used to accelerate the airflow speed of heat exchange between the air duct system and the second heat exchanger (34). The air duct system (20) is configured in at least one of the following: the airflow speed of the air outlets (22) is greater than the airflow speed of the air inlets (21); the air inlets (21) and the air outlets (22) are disposed at different lateral sides of the housing (10); the air inlets (21) and the air outlets (22) are disposed at the same lateral side of the housing (10).

## Description

### PRIORITY

This application claims priority to and benefits of Chinese Patent Application Nos. 201810450963.X, 201810450962.5, 201820714532.5, and 201820710865.0, filed with CNIPAon May 11, 2018, the entire contents of which are incorporated herein by reference.

### TECHNICAL FIELD

This application relates to the technical field of household appliances, particularly to a washing appliance.

### BACKGROUND

In the related art, a dishwasher includes a heat pump system, and the heat pump system can be used to heat washing water of the dishwasher to enhance a washing effect of the dishwasher. When the heat pump system is operating, it usually needs to suck in air with a higher temperature, and discharge air with a lower temperature after heat exchange with a heat exchanger of the heat pump system. Currently, during the air suction, the heat pump system is prone to suck in the discharged air with the lower temperature, resulting in low heat exchange efficiency of the heat pump system and degrading the performance of the dishwasher.

### SUMMARY

The present disclosure provides a washing appliance.

The washing appliance according to embodiments of the present disclosure includes: a housing; an air duct system arranged within the housing, and including an air inlet and an air outlet that are arranged in the housing; and a heat pump system including a compressor, a first heat exchanger, a throttling device, and a second heat exchanger sequentially connected to form a closed refrigerant circuit. The first heat exchanger is configured to conduct heat exchange with a washing liquid of the washing appliance, the second heat exchanger is located within the air duct system, the air duct system is provided with a fan configured to accelerate an air flow for heat exchange between the air duct system and the second heat exchanger. The air duct system is configured to satisfy at least one of the following conditions: an air velocity of the air outlet is greater than an air velocity of the air inlet; the air inlet and the air outlet are arranged on different sides of the housing; the air inlet and the air outlet are arranged on a same side of the housing.

In some embodiments, the housing includes a front plate, and the air inlet and the air outlet are both arranged in a lower portion of the front plate.

In some embodiments, the housing includes a front plate and a door body located above the front plate, the front plate and the door body are located on a same side of the housing, the front plate is provided with a first opening and a second opening, and a left side and/or a right side of the door body is provided with a third opening; the first opening serves as the air inlet, while the second opening and the third opening serve as air outlets; or the first opening and the third opening serve as air inlets, while the second opening serves as the air outlet.

In some embodiments, the housing includes a front plate and a door body located above the front plate, the front plate and the door body are located on a same side of the housing, the front plate is provided with a first opening and a second opening, and a front side of the door body is provided with a third opening; the first opening serves as the air inlet, while the second opening and the third opening serve as air outlets; or the first opening and the third opening serve as air inlets, while the second opening serves as the air outlet.

In some embodiments, a left side and/or a right side of the door body is provided with a fourth opening that serves as the air inlet or the air outlet.

In some embodiments, the housing includes a front plate and a door body located above the front plate, and the front plate and the door body are located on a same side of the housing; the front plate is provided with a first opening, and the door body is provided with a second opening; the first opening serves as the air inlet, while the second opening serves as the air outlet; or the first opening serves as the air outlet, while the second opening serves as the air inlet.

In some embodiments, the second opening is arranged on a left side and/or a right side of the door body.

In some embodiments, the second opening is arranged on a front side of the door body, and a distance between the second opening and the first opening is greater than a predetermined distance.

In some embodiments, the second opening is arranged on a front side of the door body, a distance between the second opening and the first opening is less than a predetermined distance, and the air velocity of the air outlet is greater than the air velocity of the air inlet.

In some embodiments, the second opening is arranged on a left side and/or a right side of the door body, a front side of the door body is provided with a third opening, a distance between the third opening and the first opening is greater than a predetermined distance, and the third opening serves as the air inlet or the air outlet.

In some embodiments, the housing includes a lateral plate, the second opening is arranged on a left side and/or a right side of the door body, and the lateral plate is provided with a third opening that serves as the air inlet or the air outlet.

In some embodiments, the first heat exchanger includes a first delivery pipe and a second delivery pipe thermally connected to the first delivery pipe, the first delivery pipe is configured to transport the washing liquid, and the second delivery pipe is configured to transport a refrigerant medium.

In some embodiments, the washing appliance includes: an inner container located within the housing and defining a washing chamber in the inner container; a spray system including a washing pump and a spray arm assembly located in the washing chamber, the washing pump being configured to suck the washing liquid in the washing chamber and spray the washing liquid into the washing chamber through the spray arm assembly; and a switching device connected to the washing pump, the spray arm assembly, and the first heat exchanger, and configured to determine whether the first delivery pipe is connected to a washing liquid pipeline between the washing pump and the spray arm assembly.

In some embodiments, the switching device includes a valve body and a toggling piece movably arranged within the valve body, the toggling piece switches between different positions in the valve body to determine whether the first delivery pipe is connected to the washing liquid pipeline between the washing pump and the spray arm assembly.

In some embodiments, the valve body includes a first port connected to the washing pump, a second port connected to the first delivery pipe, and a third port connected to the spray arm assembly. The toggling piece is switchable between a first position and a second position. When the toggling piece is in the first position, the first port is blocked by the toggling piece, the second port is opened by the toggling piece and is in communication with the third port, and the first delivery pipe is connected to the washing pump. When the toggling piece is in the second position, the second port is blocked by the toggling piece, the first port is opened by the toggling piece and is in communication with the third port, and the first delivery pipe is not connected to the washing liquid pipeline between the washing pump and the spray arm assembly.

In some embodiments, the second delivery pipe is fitted over the first delivery pipe, and a flow direction of the washing liquid in the first delivery pipe is opposite to a flow direction of the refrigerant medium in the second delivery pipe.

For the washing appliance according to the embodiments of the present disclosure, since the air velocity of the air outlet is greater than the air velocity of the air inlet, or the air inlet and the air outlet are located on the same side or different sides of the housing, an outflow wind speed is greater than an inflow wind speed to achieve powerful exhaust, which can effectively avoid the backflow of the exhausted wind, thus improving the heat exchange efficiency of the second heat exchanger and ensuring the performance of the washing appliance.

Additional aspects and advantages of the present disclosure will be given in part in the following description, become apparent in part from the following description, or be learned from the practice of the present disclosure.

### BRIEF DESCRIPTION OF THE DRAWINGS

These and/or other aspects and advantages of embodiments of the present disclosure will become apparent and more readily appreciated from the following descriptions made with reference to the drawings, in which:
FIG. 1 is a schematic view of a washing appliance according to an embodiment of the present disclosure.
FIG. 2 is another schematic view of a washing appliance according to an embodiment of the present disclosure.
FIG. 3 is a partial schematic view of an air duct system of a washing appliance according to an embodiment of the present disclosure.
FIG. 4 is another partial schematic view of an air duct system of a washing appliance according to an embodiment of the present disclosure.
FIG. 5 is still another schematic view of a washing appliance according to an embodiment of the present disclosure.
FIG. 6 is yet another partial schematic view of an air duct system of a washing appliance according to an embodiment of the present disclosure.
FIG. 7 is yet another partial schematic view of an air duct system of a washing appliance according to an embodiment of the present disclosure.
FIG. 8 is yet another schematic view of a washing appliance according to an embodiment of the present disclosure.
FIG. 9 is yet another schematic view of a washing appliance according to an embodiment of the present disclosure.
FIG. 10 is a plan view of a washing appliance including a heat pump system according to an embodiment of the present disclosure.
FIG. 11 is a schematic view illustrating a state of a washing liquid pipeline of a washing appliance according to an embodiment of the present disclosure.
FIG. 12 is a schematic view illustrating another state of a washing liquid pipeline of a washing appliance according to an embodiment of the present disclosure.
FIG. 13 is yet another schematic view of a washing appliance according to an embodiment of the present disclosure.
FIG. 14 is still another schematic view of a washing appliance according to an embodiment of the present disclosure.
FIG. 15 is yet another partial schematic view of an air duct system of a washing appliance according to an embodiment of the present disclosure.
FIG. 16 is another partial schematic view of an air duct system of a washing appliance according to an embodiment of the present disclosure.
FIG. 17 is still another schematic view of a washing appliance according to an embodiment of the present disclosure.
FIG. 18 is yet another schematic view of a washing appliance according to an embodiment of the present disclosure.
FIG. 19 is yet another partial schematic view of an air duct system of a washing appliance according to an embodiment of the present disclosure.
FIG. 20 is yet another partial schematic view of an air duct system of a washing appliance according to an embodiment of the present disclosure.
FIG. 21 is yet another schematic view of a washing appliance according to an embodiment of the present disclosure.
FIG. 22 is yet another schematic view of a washing appliance according to an embodiment of the present disclosure.
FIG. 23 is another plan view of a washing appliance including a heat pump system according to an embodiment of the present disclosure.
FIG. 24 is a schematic view illustrating still another state of a washing liquid pipeline of a washing appliance according to an embodiment of the present disclosure.
FIG. 25 is a schematic view illustrating yet another state of a washing liquid pipeline of a washing appliance according to an embodiment of the present disclosure.

### Reference numerals:

washing appliance 100, housing 10, front plate 10, door body 12, first opening 13, second opening 14, third opening 15, fourth opening 16, air duct system 20, air inlet 21, air outlet 22, fan 23, adjusting device 24, heat pump system 30, compressor 31, first heat exchanger 32, first delivery pipe 321, second delivery pipe 322, throttling device 33, second heat exchanger 34, inner container 40, spray system 50, washing pump 51, spray arm assembly 52, switching device 60, valve body 61, toggling piece 62.

### DETAILED DESCRIPTION

Embodiments of the present disclosure will be described in detail below, and the examples of the embodiments will be illustrated in the drawings. The same or similar elements and the elements having same or similar functions are denoted by like reference numerals throughout the description. The embodiments described below with reference to the drawings are illustrative and used to generally explain the present disclosure. The embodiments shall not be constructed to limit the present disclosure.

In the description of the present disclosure, it should be appreciated that terms such as "central," "longitudinal," "lateral," "length," "width," "thickness," "upper," "lower," "front," "rear," "left," "right," "vertical," "horizontal," "top," "bottom," "inner," "outer" "clockwise," "counterclockwise" and the like should be constructed to refer to the orientation or position as then described or as shown in the drawings under discussion. These terms are for convenience and simplification of description and do not indicate or imply that the device or element referred to must have a particular orientation, or be constructed and operated in a particular orientation, so these terms shall not be construed to limit the present disclosure. In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, the term "a plurality of' means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be appreciated by those skilled in the art according to specific situations.

A washing appliance 100 according to embodiments of the present disclosure includes a housing 10, an air duct system 20, and a heat pump system 30. The air duct system 20 is arranged in the housing 10. The air duct system 20 includes an air inlet 21 and an air outlet 22, and the air inlet 21 and the air outlet 22 are arranged in the housing 10. The heat pump system 30 includes a compressor 31, a first heat exchanger 32, a throttling device 33, and a second heat exchanger 34. Among them, the compressor 31, the first heat exchanger 32, the throttling device 33, and the second heat exchanger 34 are sequentially connected to form a closed refrigerant circuit. The first heat exchanger 32 is configured to conduct heat exchange with a washing liquid of the washing appliance 100. The second heat exchanger 34 is located in the air duct system 20. The air duct system 20 is provided with a fan 23 used to accelerate an air flow for heat exchange between the air duct system 20 and the second heat exchanger 34.

The air duct system 20 is configured to satisfy at least one of the following conditions: an air velocity of the air outlet 22 is greater than an air velocity of the air inlet 21; the air inlet 21 and the air outlet 22 are arranged on different sides of the housing 10; and the air inlet 21 and the air outlet 22 are arranged on the same side of the housing 10.

For the washing appliance according to the embodiments of the present disclosure, since the air velocity of the air outlet is greater than the air velocity of the air inlet, or the air inlet and the air outlet are located on the same side or different sides of the housing, an outflow wind speed is greater than an inflow wind speed to achieve powerful exhaust, which can effectively avoid the backflow of the exhausted wind, thus improving the heat exchange efficiency of the second heat exchanger and ensuring the performance of the washing appliance.

Specifically, the air duct system 20 is configured to satisfy at least one of the following conditions: the air velocity of the air outlet 22 is greater than the air velocity of the air inlet 21; the air inlet 21 and the air outlet 22 are arranged on different sides of the housing 10; and the air inlet 21 and the air outlet 22 are arranged on the same side of the housing 10, which can include the following implementations.
(1): The air velocity of the air outlet 22 is greater than the air velocity of the air inlet 21.
(2): The air velocity of the air outlet 22 is greater than the air velocity of the air inlet 21, and the air inlet 21 and the air outlet 22 are arranged on different sides of the housing 10.
(3): The air velocity of the air outlet 22 is greater than the air velocity of the air inlet 21, and the air inlet 21 and the air outlet 22 are arranged on the same side of the housing 10.
(4): The air velocity of the air outlet 22 is greater than the air velocity of the air inlet 21, the air inlet 21 and the air outlet 22 are arranged on different sides of the housing 10, and the air inlet 21 and the air outlet 22 are arranged on the same side of the housing 10.
(5): The air inlet 21 and the air outlet 22 are arranged on different sides of the housing 10.
(6): The air inlet 21 and the air outlet 22 are arranged on the same side of the housing 10.
(7): The air inlet 21 and the air outlet 22 are arranged on different sides of the housing 10, and the air inlet 21 and the air outlet 22 are arranged on the same side of the housing 10.

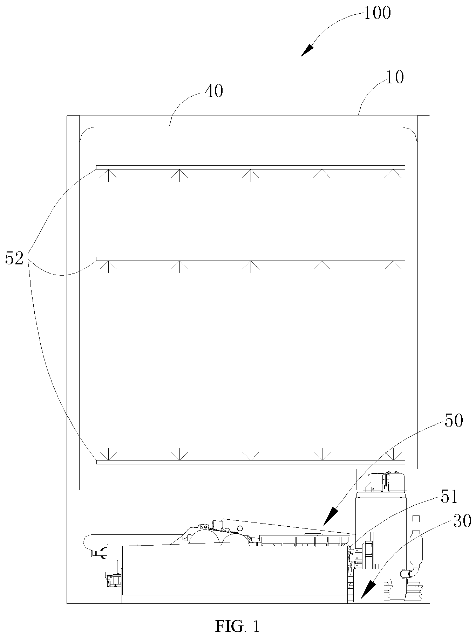

Regarding the above situations (1)-(4), refer to FIGS. 1 to 13. The washing appliance 100 according to an embodiment of the present disclosure includes a housing 10, an air duct system 20, and a heat pump system 30. The air duct system 20 is arranged in the housing 10. The air duct system 20 includes an air inlet 21 and an air outlet 22, and the air inlet 21 and the air outlet 22 are arranged in the housing 10. The heat pump system 30 includes a compressor 31, a first heat exchanger 32, a throttling device 33, and a second heat exchanger 34. Among them, the compressor 31, the first heat exchanger 32, the throttling device 33, and the second heat exchanger 34 are sequentially connected to form a closed refrigerant circuit. The first heat exchanger 32 is configured to conduct heat exchange with a washing liquid of the washing appliance 100. The second heat exchanger 34 is located in the air duct system 20. The air duct system 20 is provided with a fan 23 used to accelerate an air flow for heat exchange between the air duct system 20 and the second heat exchanger 34. The air duct system 20 is configured in such a way that an air velocity of the air outlet 22 is greater than an air velocity of the air inlet 21. It can be appreciated that this embodiment corresponds to the above situation (1). In other words, this embodiment only considers the relationship between the air velocity of the air outlet 22 and the air velocity of the air inlet 21 and does not limit the positions of the air outlet 22 and the air inlet 21.

For the washing appliance 100 according to this embodiment of the present disclosure, the air velocity of the air outlet 22 is greater than the air velocity of the air inlet 21. In this way, an outflow wind speed is greater than an inflow wind speed to realize powerful exhaust, which can effectively avoid the backflow of the exhausted wind, thus improving the heat exchange efficiency of the second heat exchanger and ensuring the performance of the washing appliance.

In this embodiment of the present disclosure, there are many methods to realize that the air velocity of the air outlet 22 is greater than the air velocity of the air inlet 21. For example, an area of the air outlet 22 is configured to be smaller than an area of the air inlet 21, so that the air velocity of the air outlet 22 will be greater than the air velocity of the air inlet 21. Alternatively, a blowing device is arranged inside the air outlet 22 to exhaust air to the outside of the air outlet to increase the air velocity, which can also make the air velocity of the air outlet 22 greater than that of the air inlet 21. It can be appreciated that the above two methods can also be used in combination or alone in the following embodiments to realize that the air velocity of the air outlet 22 is greater than the air velocity of the air inlet 21.

It should be noted that in this embodiment, a refrigerant medium transported from the compressor 31 to the first heat exchanger 32 which includes a condenser is high-temperature and high-pressure steam, and the refrigerant medium is converted into a low-temperature and high-pressure liquid or a low-temperature and medium-pressure liquid from the high-temperature and high-pressure steam through condensation and heat release, after the heat exchange with the washing liquid in the first heat exchanger 32.

The throttling device 33 includes an expansion valve. The low-temperature and high-pressure liquid refrigerant or the low-temperature and medium-pressure liquid refrigerant formed after the heat exchange through the first heat exchanger 32 is throttled by an orifice of the expansion valve and becomes a low-temperature and low-pressure liquid refrigerant or a gas-liquid refrigerant (i.e., a two-phase refrigerant), which creates conditions for evaporation of the refrigerant. It is appreciated that, the throttling device 33 may also be of other types, such as a capillary tube, etc., which is not specifically limited.

The second heat exchanger 34 includes an evaporator. The low-temperature and low-pressure liquid refrigerant or the gas-liquid (two-phase) refrigerant formed after being throttled by the throttling device 33 passes through the second heat exchanger 34, then absorbs heat from outside air to evaporate and become a low-temperature and low-pressure gas, and returns to the compressor 31 for compression to enter the next cycle. The structure of the second heat exchanger 34 may be of a tube-fin type or a microchannel type.

The fan 23 may include a cross-flow fan and an axial-flow fan and can accelerate the air flow in the air duct system 20, and the air entering from the air inlet 21 passes through the second heat exchanger 34 and is discharged from the air outlet 22. In terms of the air duct system 20 being provided with the fan 23, it can be appreciated that the air velocity within the air duct system 20 can be adjusted by the fan 23, and the position of the fan 23 can be arranged anywhere in the housing 10 as long as it can accelerate the air flow; it is not necessary to arrange the fan 23 in a solid duct (it is appreciated that, such an arrangement is also optional). When there are similar statements and descriptions in the following embodiments, they can also be appreciated by referring to the explanations herein.

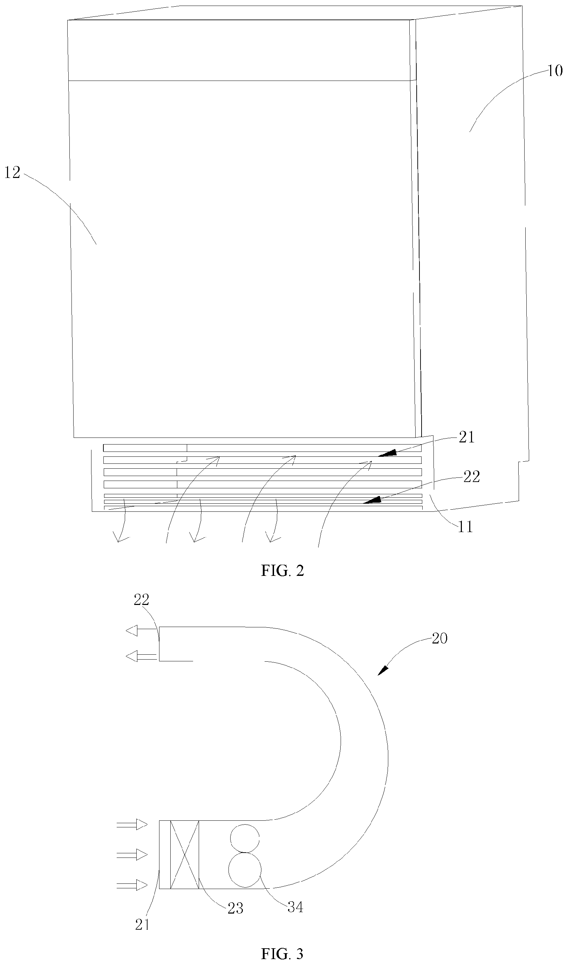

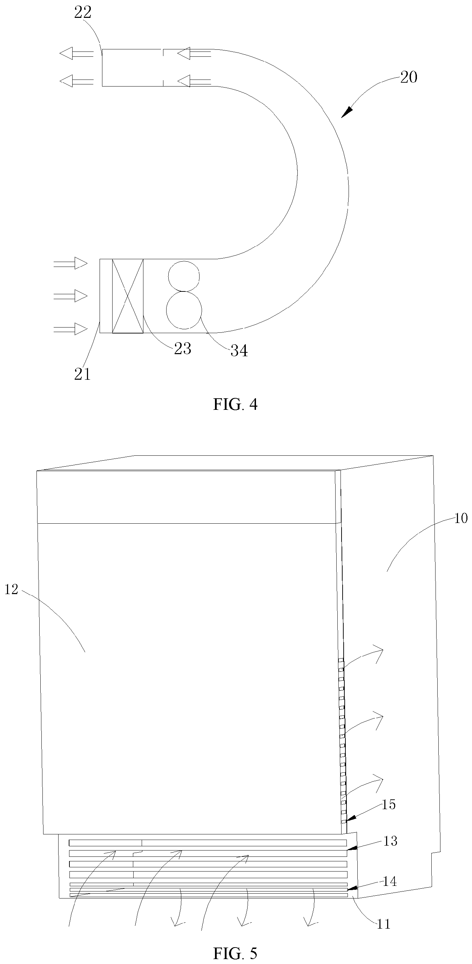

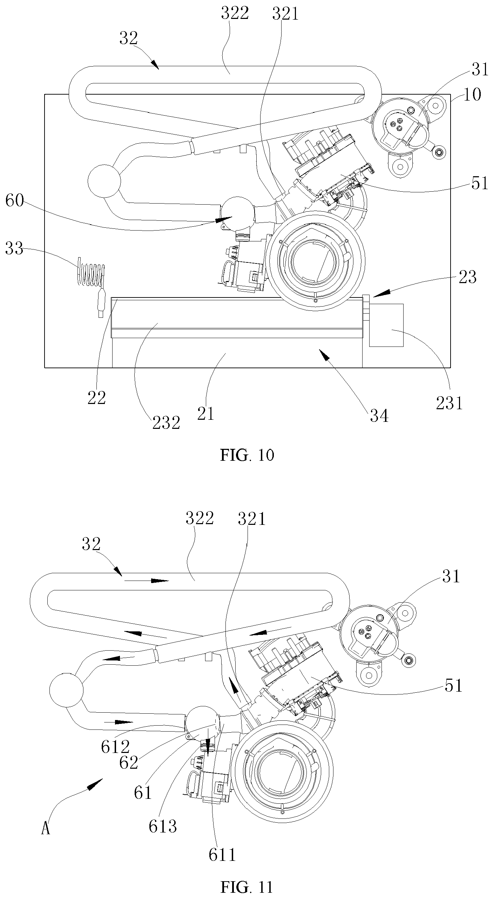

In an embodiment of the present disclosure, the fan 23 is a cross-flow fan, which includes a motor 231 and an impeller 232. As shown in FIG. 11, the second heat exchanger 34 is located between the air inlet 21 and the impeller 232. The motor 231 is connected to the impeller 232 and used to drive impeller 232 to rotate, thereby accelerating the air flow entering the air duct system 20 through the air inlet 21, so as to achieve a purpose of cooling the second heat exchanger 34 quickly. It can be appreciated that, as shown in FIGS. 3 and 4, in other embodiments, the second heat exchanger 34 may also be arranged between the air outlet 21 and the impeller 232.

It should also be noted that the washing appliance 100 may be a heat-pump dishwasher, and a front plate 11 of the washing appliance 100 may be a skirting board in the dishwasher.

Referring to FIG. 2, in some embodiments, the housing 10 includes a front plate 11, and the air inlet 21 and the air outlet 22 are both provided in a lower portion of the front plate 11. This embodiment corresponds to the above situation (3), that is, besides considering the relationship between the air velocity of the air outlet 22 and the air velocity of the air inlet 21, this embodiment also defines that the air outlet 22 and the air inlet 21 are arranged on the same side (a front side) of the housing 10.

In the embodiment shown in FIG. 2, the area of the air outlet 22 is smaller than the area of the air inlet 21 to achieve that the outflow wind speed of the air outlet 22 is greater than the inflow wind speed of the air inlet 21. In this way, the backflow of the exhausted wind can be avoided effectively, and the heat exchange efficiency of the second heat exchanger 34 can be improved. In the illustrated embodiment, the air inlet 21 and the air outlet 22 include a plurality of air sub-inlets and a plurality of air sub-outlets, respectively, and an overall area of the air outlet 22 is smaller than an overall area of the air inlet 21. In some embodiments, an area of each air sub-outlet of the air outlet 22 may be smaller than an area of each air sub-inlet of the air inlet 21. It is appreciated that, the air sub-outlets of the air outlet 22 and the air sub-inlets of the air inlet 21 can also be arranged in other ways. For example, the area of each air sub-outlet of the air outlet 22 is greater than or equal to the area of each air sub-inlet of the air inlet 21; or the area of a part of the air sub-outlets of the air outlet 22 is smaller than an area of a part of the air sub-inlets of the air inlet 21. It can be appreciated that the above arrangement is only exemplary and constitutes no limitation.

Specifically, the air inlet 21 is located above the air outlet 22. In this embodiment, air ducts of the air duct system 20 may be integrated air ducts and/or air ducts connected in series. FIG. 3 is a simple structural diagram of the air duct system 20 having integrated air ducts, and FIG. 4 is a simple structural diagram of the air duct system 20 having air ducts connected in series.

More specifically, in an embodiment shown in FIGS. 3 and 4, the fan 23 may be located in the air duct system 20, and the second heat exchanger 34 is located downstream of the fan 23. Air is forced through the air inlet 21 in the lower portion of the front plate 11 by the fan 23, and when discharged from the air outlet 22 in the lower portion of the front plate 11 after passing through the second heat exchanger 34, the outside air exchanges heat with the second heat exchanger 34. Since the area of the air outlet 22 is smaller than that of the air inlet 21, the wind speed at the air outlet 22 is greater than the wind speed of the air inlet 21, thereby avoiding the backflow of the exhausted wind. It is appreciated that, in some embodiments, the second heat exchanger 34 may also be arranged upstream of the fan 23, which is not specifically limited.

In addition, in FIG. 2, the housing 10 includes a door body 12 located above the front plate 11, and the front plate 11 and the door body 12 are located on the same side of the housing 10, for example, a side facing a user when the washing appliance 100 is placed normally.

Referring to FIG. 5, in some embodiments, the front plate 11 is provided with a first opening 13 and a second opening 14, and a left side and/or a right side of the door body 12 is provided with a third opening 15. The first opening 13 is used as an air inlet 21, the second opening 14 and the third opening 15 are used as air outlets 22; or the first opening 13 and the third opening 15 are used as air inlets 21, and the second opening 14 is used as an air outlet 22.

In an embodiment shown in FIG. 5, the first opening 13 serves as the air inlet 21, and the second opening 14 and the third opening 15 serve as the air outlet 22. In this way, the first opening 13 guarantees an input air volume, and the second opening 14 as the air outlet 22 is arranged in the front plate 11 of the housing 10, which can avoid a working condition of poor ventilation in other parts due to the unsuitable size and inappropriate installation of a cabinet. Meanwhile, the third opening 15 is arranged on the left side and/or the right side of the door body 12, and when the third opening 15 serves as the air outlet 22, cold air is discharged from a lateral side of the door, which can prevent the discharged air from causing any adverse effect on the user experience. At the same time, the air duct system 20 is configured such that the air velocity of the air outlet 22 is greater than the air velocity of the air inlet 21, which can avoid the backflow of the discharged air and improve the heat exchange efficiency of the heat pump system 30. This embodiment corresponds to the situation (4), that is, in addition to considering the relationship between the air velocity of the air outlet 22 and the air velocity of the air inlet 21, this embodiment also defines the positions of the air outlet 22 and the air inlet 21 in the housing 10. Specifically, in this embodiment, there may be two air outlets 22, one being provided on the same side of the housing 10 as the air inlet 21 (that is, the air outlet and the air inlet are both located on a front side of the front plate 11), and the other being provided on a different side of the housing 10 from the air inlet 21 (that is, one of the air outlet and the air inlet is located in the front plate 11, while the other of the air outlet and the air inlet is located on the left or right side of the door body 12).

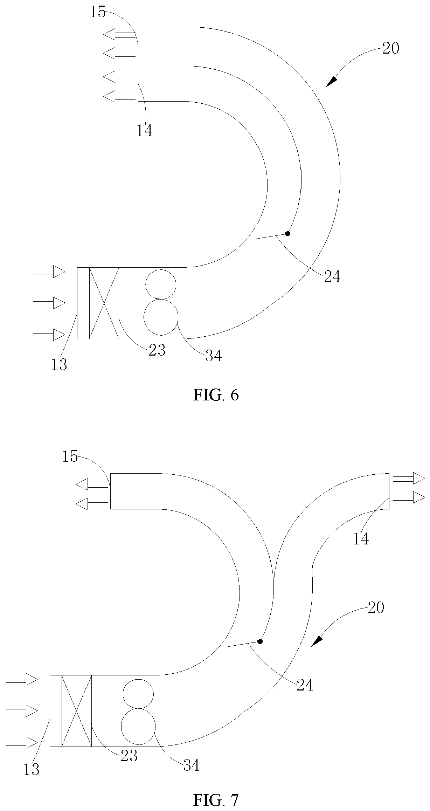

In this embodiment, air ducts of the air duct system 20 can be connected in parallel, as shown in FIG. 6 or FIG. 7. In an embodiment of FIGS. 6 and 7, the air duct system 20 further includes an adjusting device 24 that can adjust a ratio of output air from different air outlets 22 to ensure that the user can enjoy good experience. For example, in the embodiment shown in FIG. 5, the air duct system 20 shown in FIG. 6 is adopted. When the temperature of the output air is not too low (for example, 15°C - 23°C) during operation of a heat pump, an output air volume of the second opening 14 can be made larger while an output air volume of the third opening 15 can be made smaller, by means of the adjusting device 24. When the temperature of the output air is relatively low (for example, 8°C - 15°C), the adjusting device 24 can realize that the third opening 15 has a larger output air volume while the second opening 14 have a smaller output air volume. In this way, when the temperature is relatively lower, the exhaust air volume at the lateral side of the door is relatively large, which can avoid poor user experience due to the air exhaust on a front side of the door. At the same time, the air duct system 20 is configured such that the air velocity of the air outlet 22 is greater than the air velocity of the air inlet 21, which can avoid the backflow of the output air and improve the heat exchange efficiency of the heat pump system 30. It should be noted that the above temperature ranges are merely exemplary and constitute no specific limitation. Generally, when the washing appliance 100 is working, the temperature at the air outlet 22 is generally between 0°C and 26°C.

It can be appreciated that, in some embodiments, the first opening 13 and the third opening 15 may be used as the air inlets 21, and the second opening 14 may be used as the air outlet 22, which will not be specifically limited.

It should be noted that the adjusting device 24 includes devices for adjusting the air volume, such as air valves and grids, which will not be specifically limited.

It can be appreciated that in the following embodiment where a plurality of air outlets 22 are provided, an adjusting device 24 can also be provided in the air duct system 20 to adjust the ratio of output air from different air outlets 22 to ensure that the user enjoys good experience.

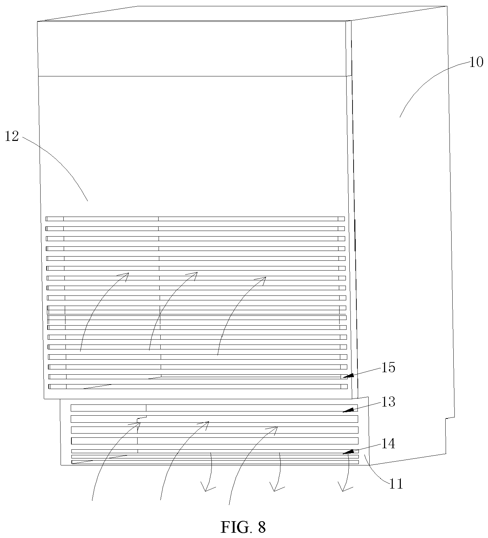

Referring to FIG. 8, in some embodiments, the front plate 11 is provided with a first opening 13 and a second opening 14, and a front side of the door body 12 is provided with a third opening 15. The first opening 13 serves as an air inlet 21, and the second opening 14 and the third opening 15 serve as air outlets 22; or the first opening 13 and the third opening 15 serve as air inlets 21, and the second opening 14 serves as an air outlet 22. This embodiment corresponds to the above situation (3), that is, besides considering the relationship between the air velocity of the air outlet 22 and the air velocity of the air inlet 21, this embodiment also defines the positions of the air outlet 22 and the air inlet 21 in the housing 10. Specifically, in this embodiment, there may be two air outlets 22, and the two air outlets 22 and the air inlet 21 are all arranged on the same side (front side) of the housing 10, that is, one of the two air outlets 22 is arranged in the front plate 11, the other thereof is arranged on the front side of the door body 12, and the air inlet 21 is arranged in the front plate 11.

In the embodiment shown in FIG. 8, the first opening 13 and the third opening 15 serve as the air inlets 21, and the second opening 14 serves as the air outlet 22. In this way, the first opening 13 and the third opening 15 in the front plate 11 and the door body 12 can guarantee the input air volume, and the lower portion of the front plate 11 can realize air discharge, to avoid the working condition of poor ventilation in other parts of the housing 10 due to the unsuitable size and inappropriate installation of the cabinet. At the same time, the air duct system 20 is configured such that the air velocity of the air outlet 22 is greater than the air velocity of the air inlet 21, which can avoid the backflow of the discharged air and improve the heat exchange efficiency of the heat pump system 30. In this embodiment, the air ducts of the air duct system 20 may be connected in parallel as shown in FIG. 6 or FIG. 7.

It can be appreciated that, in some embodiments, the first opening 13 can be used as the air inlet 21, and the second opening 14 and the third opening 15 can be used as the air outlets 22. In such an embodiment, simply by adjusting areas of the openings or providing a blowing device inside the air outlets 22, the air velocity of the air outlet 22 can be made greater than the air velocity of the air inlet 21, and the backflow of the discharged air can be avoided.

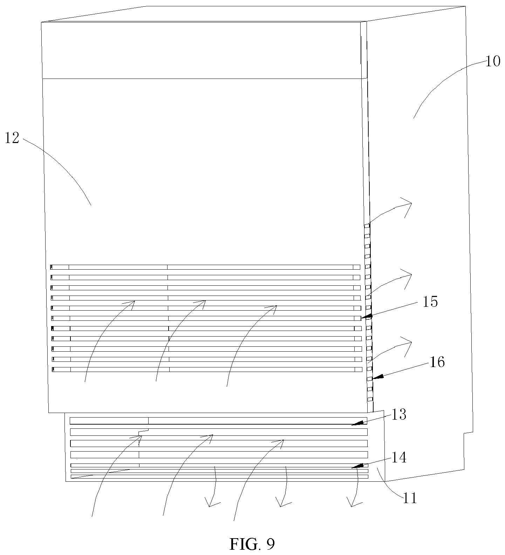

Referring to FIG. 9, in the above embodiment, a fourth opening 16 is provided on the left side and/or right side of the door body 12, and the fourth opening 16 can be used as an air inlet 21 or an air outlet 22.

In an embodiment shown in FIG. 9, the fourth opening 16 is provided on the right side of the door body 12, the first opening 13 and the third opening 15 serve as the air inlets 21, and the second opening 14 and the fourth opening 16 serve as the air outlets 22. In this way, by providing a plurality of air inlets 21 or air outlets 22, sufficient input air volume and sufficient output air volume can be ensured to make the air input and the air output smooth. Meanwhile, the air duct system 20 is configured such that the air velocity of the air outlet 22 is greater than the air velocity of the air inlet 21, which can avoid the backflow of the discharged air and improve the heat exchange efficiency of the heat pump system 30. In this embodiment, the air ducts of the air duct system 20 may be connected in parallel as shown in FIG. 6 or FIG. 7. This embodiment corresponds to the above situation (4), that is, besides considering the relationship between the air velocity of the air outlet 22 and the air velocity of the air inlet 21, this embodiment also defines the positions of the air outlet 22 and the air inlet 21 in the housing 10. Specifically, in this embodiment, there may be three air outlets 22, the air inlet 21 is located in the front plate 11, a first air outlet 22 is also located in the front plate 11, a second air outlet 22 is located on the front side of the door body 12, and a third air outlet 22 is located on the right side of the door body 12.

Referring to FIGS. 1 and 10, in some embodiments, the first heat exchanger 32 includes a first delivery pipe 321 and a second delivery pipe 322. The first delivery pipe 321 is thermally connected to the second delivery pipe 322. The first delivery pipe 321 is used to transport a washing liquid, and the second delivery pipe 322 is used to transport a refrigerant medium.

In this way, the washing liquid and the refrigerant medium can exchange heat in the first heat exchanger 32, to heat the washing liquid and transport it to a spray arm assembly 52.

In some embodiments, the second delivery pipe 322 is fitted over the first delivery pipe 321, and a flow direction of the washing liquid in the first delivery pipe 321 is opposite to a flow direction of the refrigerant medium in the second delivery pipe 322. In this way, the first delivery pipe 321 and the second delivery pipe 322 form a pipe-in-pipe structure, which can improve the heat exchange efficiency. The opposite flow directions of the washing liquid in the first delivery pipe 321 and the refrigerant medium in the second delivery pipe 322 can further improve the heat exchange efficiency.

It should be noted that the flow direction of the washing liquid in the first delivery pipe 321 can also be the same as the flow direction of the refrigerant medium in the second delivery pipe 322, which can be set according to specific conditions.

In some embodiments, the washing appliance 100 further includes an inner container 40, a spray system 50, and a switching device 60. The inner container 40 is located in the housing 10 and defines a washing chamber in the inner container 40. The spray system 50 includes a washing pump 51 and a spray arm assembly 52, and the spray arm assembly 52 is located in the washing chamber. The washing pump 51 is used to suck the washing liquid in the washing chamber and spray it into the washing chamber through the spray arm assembly 52. The switching device 60 is connected to the washing pump 51, the spray arm assembly 52, and the first heat exchanger 32. The switching device 60 is configured to determine whether the first delivery pipe 321 is connected to a washing liquid pipeline between the washing pump 51 and the spray arm assembly 52.

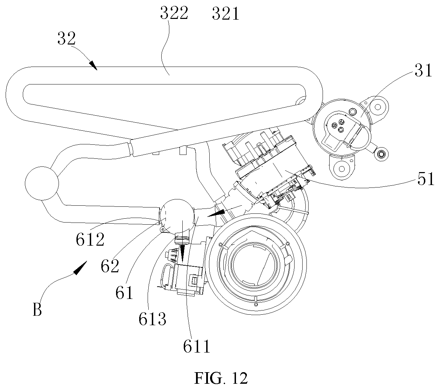

In the washing appliance 100 according to this embodiment, when the washing liquid needs to be heated, the switching device 60 can switch the first delivery pipe 321 to be connected to the washing liquid pipeline between the washing pump 51 and the spray arm assembly 52, so that the washing liquid can pass through the first delivery pipe 321 and realize heat exchange with the refrigerant medium in the second delivery pipe 322, and then the heated washing liquid can be sprayed out through the spray arm assembly 52 under the drive of the washing pump 51 (as shown in FIG. 11). When the washing liquid does not need to be heated, the switching device 60 can switch the first delivery pipe 321 not to be connected to the washing liquid pipeline between the washing pump 51 and the spray arm assembly 52, so that the washing liquid does not need passing through the first delivery pipe 321, and the washing liquid flows from the washing pump 51 to the spray arm assembly 52 through the switching device 60 (as shown in FIG. 12), which can shorten a flow path of the washing liquid, optimize a water system of the washing appliance 100, reduce water consumption, and save energy.

In some embodiments, the switching device 60 includes a valve body 61 and a toggling piece 62. The toggling piece 62 can move in the valve body 61, and switch between different positions in the valve body 61 to determine whether the first delivery pipe 321 is connected to the washing liquid pipeline between the washing pump 51 and the spray arm assembly 52.

Specifically, the valve body 61 includes a first port 611, a second port 612, and a third port 613. The first port 611 is connected to the washing pump 51 by a pipeline, the second port 612 is connected to the first delivery pipe 321 by a pipeline, and the third port 613 is connected to the spray arm assembly 52 by a pipeline. Referring to FIGS. 11 and 12, the toggling piece 62 can be switched between a first position A and a second position B to determine whether the first delivery pipe 321 is connected to the washing liquid pipeline between the washing pump 51 and the spray arm assembly 52. When the toggling piece 62 is in the first position A (as shown in FIG. 11, an arrow indicates a flow direction of the washing liquid), the first port 611 is blocked by the toggling piece 62, the second port 612 is opened by the toggling piece 62, and the second port 612 is in communication with the third port 613. Hence, the first delivery pipe 321 is connected to the washing pump 51, and the washing liquid pipeline is established between the washing pump 51, the first delivery pipe 321, and the spray arm assembly 52. When the toggling piece 62 is in the second position B (as shown in FIG. 12, an arrow indicates a flow direction of the washing liquid), the second port 612 is blocked by the toggling piece 62, the first port 611 is opened by the toggling piece 62, and the first port 611 is in communication with the third port 613. Hence, the first delivery pipe 321 is not connected to the washing liquid pipeline between the washing pump 51 and the spray arm assembly 52, and the washing liquid pipeline is established only between the washing pump 51 and the spray arm assembly 52.

It can be appreciated that the present disclosure also includes embodiments corresponding to the situation (2). In the situation (2), considering the air velocity of the air outlet 22 and the air velocity of the air inlet 21, referring to FIG. 5, the air inlet 21 can be arranged in the front plate 11, and the air outlet 22 can be arranged on one or both lateral sides of the door body 12 (such as the left side, the right side, or the left and right sides); or the air outlet 22 can be arranged in the front plate 11, and the air inlet 21 can be arranged on one or both lateral sides of the door body 12 (such as the left side, the right side, or the left and right sides).

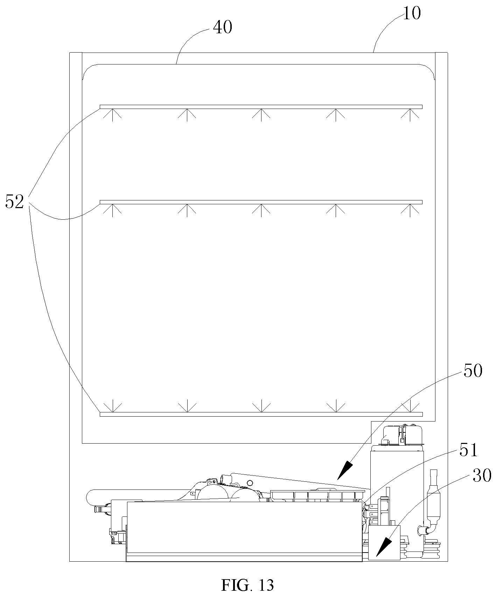

As for the above situations (5) to (7), referring to FIGS. 13 to 23, the washing appliance 100 in an embodiment of the present disclosure includes a housing 10, an air duct system 20, and a heat pump system 30. The housing 10 includes a front plate 11 and a door body 12, the front plate 11 and the door body 12 are located on the same side of the housing 10, and the door body 12 is located above the front plate 11. The air duct system 20 is arranged within the housing 10. The air duct system 20 includes an air inlet 21 and an air outlet 22, which are arranged in the housing 10. The front plate 11 is provided with a first opening 13, and the door body 12 is provided with a second opening 14. The first opening 13 is used as the air inlet 21 of the air duct system 20 and the second opening 14 is used as the air outlet 22 of the air duct system 20; or the first opening 13 is used as the air outlet 22 of the air duct system 20 and the second opening 14 is used as the air inlet 21 of the air duct system 20.

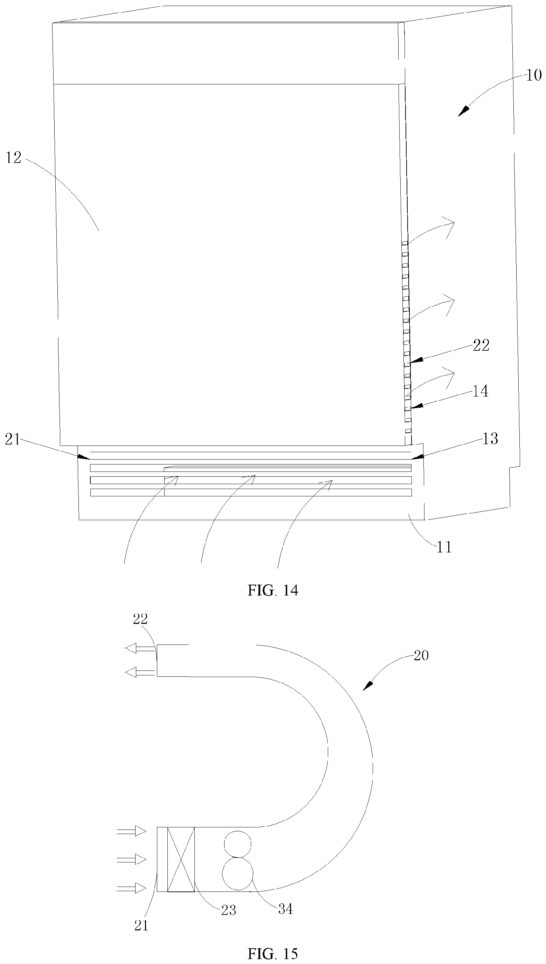

For example, in an embodiment shown in FIG. 14, the first opening 13 serves as the air inlet 21 of the air duct system 20 and the second opening 14 serves as the air outlet 22 of the air duct system 20. The heat pump system 30 includes a compressor 31, a first heat exchanger 32, a throttling device 33, and a second heat exchanger 34. Among them, the compressor 31, the first heat exchanger 32, the throttling device 33, and the second heat exchanger 34 are sequentially connected to form a closed refrigerant circuit. The first heat exchanger 32 is configured to conduct heat exchange with a washing liquid of the washing appliance 100. The second heat exchanger 34 is located in the air duct system 20. The air duct system 20 is provided with a fan 23 used to accelerate an air flow for heat exchange between the air duct system 20 and the second heat exchanger 34. It can be appreciated that this embodiment corresponds to the above situation (5). In other words, this embodiment only considers the positions of the air outlet 22 and the air inlet 21, and does not limit the relationship between the air velocity of the air outlet 22 and the air velocity of the air inlet 21 and does not limit the positions of the air outlet 22 and the air inlet 21. Specifically, in this embodiment, the air inlet 21 is located in the front plate 11, the air outlet 22 is located in the door body 12, and the air outlet 22 and the air inlet 21 may be located on the same side or different sides of the housing 10. For example, the air outlet 22 is located on a front side of the door body, and the air inlet 21 is located on a front side of the front plate 11; or the air outlet 22 is located on a left or right side of the door body 12, and the air inlet 21 is located on the front side of the front plate 11.

For the washing appliance 100 according to the embodiment of the present disclosure, the air inlet 21 and the air outlet 22 are arranged in the front plate 11 and the door body 12, respectively, so that the backflow of the exhausted wind can be avoided effectively when the heat pump system 30 of the washing appliance 100 is working, so as to improve the heat exchange efficiency of the second heat exchanger 34 and ensure the performance of the washing appliance 100.

It can be appreciated that in such an embodiment, the air velocity of the air outlet 22 can also be set to be greater than the air velocity of the air inlet 21. In this way, the outflow wind speed is greater than the inflow wind speed to realize powerful exhaust, which can further avoid the backflow of the exhausted wind, thus improving the heat exchange efficiency of the second heat exchanger 34 and ensuring the performance of the washing appliance 100. At this time, this embodiment is basically the same as the embodiment of the above situation (2).

It should be noted that in this embodiment, a refrigerant medium transported from the compressor 31 to the first heat exchanger 32 which includes a condenser is high-temperature and high-pressure steam, and the refrigerant medium is converted into a low-temperature and high-pressure liquid or a medium-temperature and high-pressure liquid from the high-temperature and high-pressure steam through condensation and heat release, after the heat exchange with the washing liquid in the first heat exchanger 32.

The throttling device 33 includes an expansion valve. The low-temperature and high-pressure liquid refrigerant or the medium-temperature and high-pressure liquid refrigerant formed after the heat exchange through the first heat exchanger 32 is throttled by an orifice of the expansion valve and becomes a low-temperature and low-pressure liquid refrigerant or a gas-liquid refrigerant (i.e., a two-phase refrigerant), which creates conditions for evaporation of the refrigerant. It is appreciated that, the throttling device 33 may also be of other types, such as a capillary tube, etc., which is not specifically limited.

The second heat exchanger 34 includes an evaporator. The low-temperature and low-pressure liquid refrigerant or the gas-liquid (two-phase) refrigerant formed after being throttled by the throttling device 33 passes through the second heat exchanger 34, then absorbs heat from outside air to evaporate and become a low-temperature and low-pressure gas, and returns to the compressor 31 for compression to enter the next cycle.

The fan 23 may include a cross-flow fan and an axial-flow fan and can accelerate the air flow in the air duct system 20, and the air entering from the air inlet 21 passes through the second heat exchanger 34 and is discharged from the air outlet 22. In terms of the air duct system 20 being provided with the fan 23, it can be appreciated that the air velocity within the air duct system 20 can be adjusted by the fan 23, and the position of the fan 23 can be arranged anywhere in the housing 10 as long as it can accelerate the air flow; it is not necessary to arrange the fan 23 in a solid duct (it is appreciated that, such an arrangement is also optional). When there are similar statements and descriptions in the following embodiments, they can also be appreciated by referring to the explanations herein.

In an embodiment of the present disclosure, the fan 23 is a cross-flow fan, which includes a motor 231 and an impeller 232. As shown in FIG. 11, the second heat exchanger 34 is located between the air inlet 21 and the impeller 232. The motor 231 is connected to the impeller 232 and used to drive impeller 232 to rotate, thereby accelerating the air flow entering the air duct system 20 through the air inlet 21, so as to achieve a purpose of cooling the second heat exchanger 34 quickly. It can be appreciated that, as shown in FIGS. 3 and 4, in other embodiments, the second heat exchanger 34 may also be arranged between the air outlet 21 and the impeller 232.

It should also be noted that the washing appliance 100 may be a heat-pump dishwasher, and a front plate 11 of the washing appliance 100 may be a skirting board in the dishwasher.

Referring to FIG. 14, in some embodiments, the second opening 14 is arranged on the left side and/or the right side of the door body 12.

In an embodiment shown in FIG. 14, the first opening 13 serves as the air inlet 21, and the second opening 14 serves as the air outlet 22. In this way, the air inlet 21 arranged in the front plate 11 guarantees an input air volume, and the air outlet 22 arranged on the left and/or right side of the door body 12 can avoid a phenomenon of backflow of discharged air when the heat pump system 30 is working, improving the heat exchange efficiency of the heat pump system 30. At the same time, it is possible to avoid a working condition of poor ventilation in other parts due to the unsuitable size and inappropriate installation of a cabinet. For example, in a built-in washing appliance, due to a limited size of the cabinet, if the air outlet 22 is arranged in a lateral plate, poor ventilation will be caused, diminishing the heat exchange efficiency. In addition, the arrangement of the air outlet 22 on the left and/or right side of the door body 12 can also avoid a phenomenon that the discharged cold air degrades the user experience. It can be appreciated that this embodiment corresponds to the above situation (5). In other words, in this embodiment, the air inlet 21 and the air outlet 22 are located on different sides of the housing 10. Specifically, one of the air inlet 21 and the air outlet 22 is arranged on the front plate 11, and the other thereof is arranged on the left and/or right side of the door body 12.

It can be appreciated that in such an embodiment, the air velocity of the air outlet 22 can also be set to be greater than the air velocity of the air inlet 21. In this way, the outflow wind speed is greater than the inflow wind speed to realize powerful exhaust, which can further avoid the backflow of the exhausted wind, thus improving the heat exchange efficiency of the second heat exchanger 34 and ensuring the performance of the washing appliance 100. At this time, this embodiment is basically the same as the embodiment of the above situation (2).

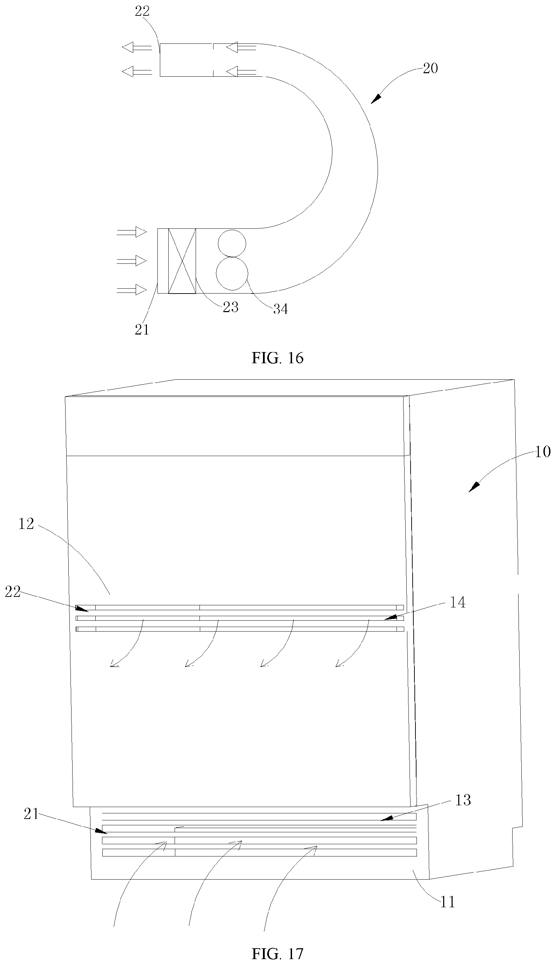

Specifically, in this embodiment, air ducts of the air duct system 20 may be integrated air ducts and/or air ducts connected in series. FIG. 15 is a simple structural diagram of the air duct system 20 having integrated air ducts, and FIG. 16 is a simple structural diagram of the air duct system 20 having air ducts connected in series. It is appreciated that, the air ducts can be arranged in other ways, which will not be specially limited, as long as the function can be realized.

In an embodiment shown in FIGS. 15 and 16, the fan 23 may be located in the air duct system 20, and the second heat exchanger 34 is located downstream of the fan 23. Air is forced through the air inlet 21 in a lower portion of the front plate 11 by the fan 23, and when discharged from the air outlet 22 on the left and/or right side of the door body 12 after passing through the second heat exchanger 34, the outside air exchanges heat with the second heat exchanger 34. It is appreciated that, in some embodiments, the second heat exchanger 34 may also be arranged upstream of the fan 23, which is not specifically limited.

The fact that the second opening 14 is arranged on the left and/or right side of the door body 12 includes three possible implementations: 1) the second opening 14 being arranged on the left side of the door body 12; 2) the second opening 14 being arranged on the right side of the door body 12; and 3) second openings 14 are arranged on the left side and the right side of the door body 12.

Referring to FIG. 17, in some embodiments, the second opening 14 is arranged on a front side of the door body 13, and a distance between the second opening 15 and the first opening 13 is greater than a predetermined distance.

In this way, the air inlet 21 and the air outlet 22 are arranged on the front plate 11 or the front side of the door body 12, and a distance between the air inlet 21 and the air outlet 22 is greater than a predetermined distance, which can avoid the backflow of the exhausted wind when the heat pump system 30 is working. At the same time, it is possible to avoid a working condition of poor ventilation in other parts due to the unsuitable size and inappropriate installation of the cabinet.

In an embodiment shown in FIG. 17, the first opening 13 serves as the air inlet 21 and the second opening 14 serves as the air outlet 22. It can be appreciated that in some embodiments, the second opening 14 may also be used as the air inlet 21 and the first opening 13 may be used as the air outlet 22. In the embodiment shown in FIG. 17, the air duct system 20 can adopt the integrated air ducts and/or the serially connected air ducts as shown in FIGS. 15 and 16. It is appreciated that, the air ducts can be arranged in other ways, which will not be specially limited, as long as the function can be realized. It can be appreciated that this embodiment corresponds to the above situation (6). In other words, in this embodiment, the air inlet 21 and the air outlet 22 are located on the same side of the housing 10. Specifically, one of the air inlet 21 and the air outlet 22 is provided on the front plate 11 and the other thereof is provided on the front side of the door body 12.

It can be appreciated that in such an embodiment, the air velocity of the air outlet 22 can also be set to be greater than the air velocity of the air inlet 21. In this way, the outflow wind speed is greater than the inflow wind speed to realize powerful exhaust, which can further avoid the backflow of the exhausted wind, thus improving the heat exchange efficiency of the second heat exchanger 34 and ensuring the performance of the washing appliance 100. At this time, this embodiment is basically the same as the embodiment of the above situation (3).

It should be noted that the above predetermined distance is set by testing before the washing appliance 100 leaves the factory. When the distance between the air inlet 21 and the air outlet 22 is greater than the predetermined distance, the backflow of the exhausted wind can be avoided. When there are similar statements and descriptions in the following embodiments, they can also be appreciated by referring to the explanations herein. It can be appreciated that, in such an embodiment, the air velocity of the air outlet 22 can also be set to be greater than the air velocity of the air inlet 21 to further avoid the backflow of the exhausted wind.

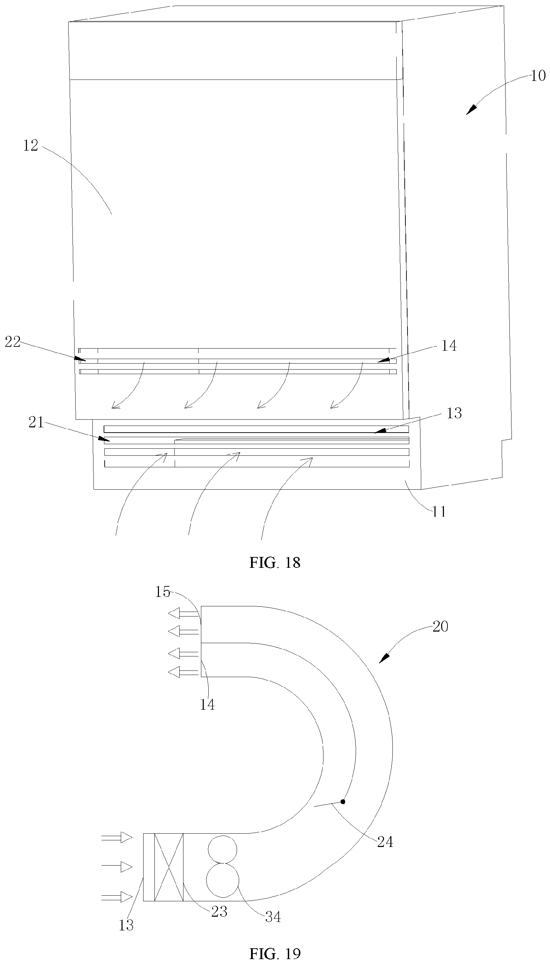

Referring to FIG. 18, in some embodiments, the second opening 14 is provided on the front side of the door body 12, the distance between the second opening 14 and the first opening 13 is less than the predetermined distance, and the air velocity of the air outlet 22 is greater than the air velocity of the air inlet 21. It can be appreciated that this embodiment is basically the same as the embodiment of the above situation (3). In other words, in this embodiment, the air inlet 21 and the air outlet 22 are located on the same side of the housing 10, and the air velocity of the air outlet 22 is greater than the air velocity of the air inlet 21. Specifically, one of the air inlet 21 and the air outlet 22 is provided on the front plate 11 and the other thereof is provided on the front side of the door body 12.

In this embodiment, the distance between the second opening 14 and the first opening 13 is less than the predetermined distance, that is, the distance between the air inlet and the air outlet is less than the predetermined distance. Further, the air duct system 20 is configured such that the air velocity of the air outlet 22 is greater than the air velocity of the air inlet 21 to avoid the phenomenon of backflow of the exhausted wind when the heat pump system 30 is working. Meanwhile, it is also possible to avoid the working condition of poor ventilation in other parts due to the unsuitable size and inappropriate installation of the cabinet.

In an embodiment shown in FIG. 18, the first opening 13 serves as the air inlet 21 and the second opening 14 serves as the air outlet 22. It can be appreciated that in some embodiments, the second opening 14 may also be used as the air inlet 21 and the first opening 13 may be used as the air outlet 22. In the embodiment shown in FIG. 18, the air duct system 20 may also adopt the integrated air ducts and/or the serially connected air ducts as shown in FIGS. 15 and 16. It is appreciated that, the air ducts can be arranged in other ways, which will not be specially limited, as long as the function can be realized.

It should be noted that, in embodiments of the present disclosure, there are many methods to realize that the air velocity of the air outlet 22 is greater than the air velocity of the air inlet 21. For example, an area of the air outlet 22 is configured to be smaller than an area of the air inlet 21, so that the air velocity of the air outlet 22 will be greater than the air velocity of the air inlet 21. Alternatively, a blowing device is arranged inside the air outlet 22 to exhaust air to the outside of the air outlet to increase the air velocity, which can also make the air velocity of the air outlet 22 greater than that of the air inlet 21.

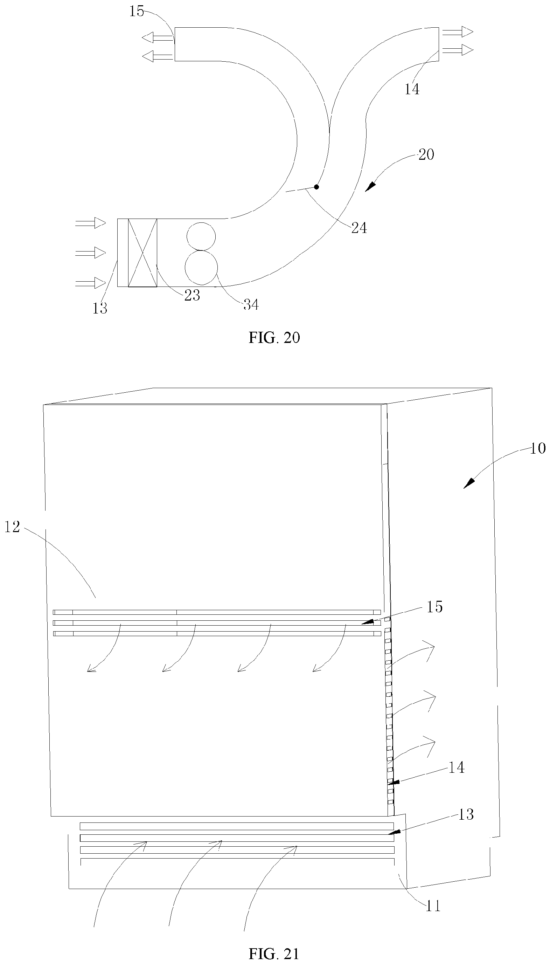

Referring to FIG. 21, in some embodiments, the second opening 14 is provided on the left and/or right side of the door body 12, and the front side of the door body 12 is provided with a third opening 15. A distance between the third opening 15 and the first opening 13 is greater than a predetermined distance, and the third opening 15 serves as the air inlet 21 or the air outlet 22.

In an embodiment shown in FIG. 21, the first opening 13 serves as the air inlet 21, the second opening 14 and the third opening 15 serve as the air outlets 22, and the distance between the third opening 15 and the first opening 13 is greater than the predetermined distance. It can be appreciated that this embodiment corresponds to the above situation (7). Specifically, in this embodiment, there are two air outlets 22. The air inlet 21 and one of the air outlets 22 are located on the same side of the housing 10 (located on the front plate 11 and the front side of the door body 12, respectively), while the air inlet 21 and the other air outlet 22 are located on different sides of the housing 10 (located on the front plate 11 and the right side of the door body 12, respectively).

It can be appreciated that, in such an embodiment, the air velocity of the air outlet 22 can also be set to be greater than the air velocity of the air inlet 21. In this way, the outflow wind speed is greater than the inflow wind speed to realize powerful exhaust, which can further avoid the backflow of the exhausted wind, thus improving the heat exchange efficiency of the second heat exchanger 34 and ensuring the performance of the washing appliance 100. At this time, this embodiment is basically the same as the embodiment of the above situation (4).

In this way, it is possible to effectively avoid the backflow of the exhausted wind when the heat pump system 30 is working, and improve the heat exchange efficiency of the heat pump system 30. Meanwhile, since the second opening 14 is provided on the left and/or right side of the door body 12, when the second opening 14 serves as the air outlet 22, air is discharged from a lateral side of the door, preventing the exhausted wind from degrading the user experience. In this embodiment, the air ducts of the air duct system 20 may also be connected in parallel, as shown in FIG. 19 or FIG. 20. In an illustrated embodiment, the air duct system 20 further includes an adjusting device 24 that can adjust a ratio of output air from different air outlets 22 to ensure that the user can enjoy good experience. For example, in the embodiment shown in FIG. 21, the air duct system 20 shown in FIG. 20 is adopted. When the temperature of the output air is not too low (for example, 15°C - 23°C) during operation of a heat pump, an output air volume of the third opening 15 can be made larger while an output air volume of the second opening 14 can be made smaller, by means of the adjusting device 24. When the temperature of the output air is relatively low (for example, 8°C - 15°C), the adjusting device 24 can realize that the second opening 14 has a larger output air volume while the third opening 15 have a smaller output air volume. In this way, when the temperature is relatively lower, the exhaust air volume at the lateral side of the door is relatively large, which can avoid poor user experience due to the air exhaust on a front side of the door. The above temperature ranges are merely exemplary and constitute no specific limitation. Generally, when the washing appliance 100 is working, the temperature at the air outlet 22 is generally between 0°C and 26°C.

It can be appreciated that, in some embodiments, the first opening 13 and the third opening 15 may be used as the air inlets 21, and the second opening 14 may be used as the air outlet 22; or the first opening 13 and the second opening 14 may be used as the air inlets 21, and the third opening 15 may be used as the air outlet 22, which will not be specifically limited.

It should be noted that the adjusting device 24 includes devices for adjusting the air volume, such as air valves and grids, which will not be specifically limited.

Additionally, it can be appreciated that in the following embodiment where a plurality of air outlets 22 are provided, an adjusting device 24 can also be provided in the air duct system 20 to adjust the ratio of output air from different air outlets 22 to ensure that the user enjoys good experience.

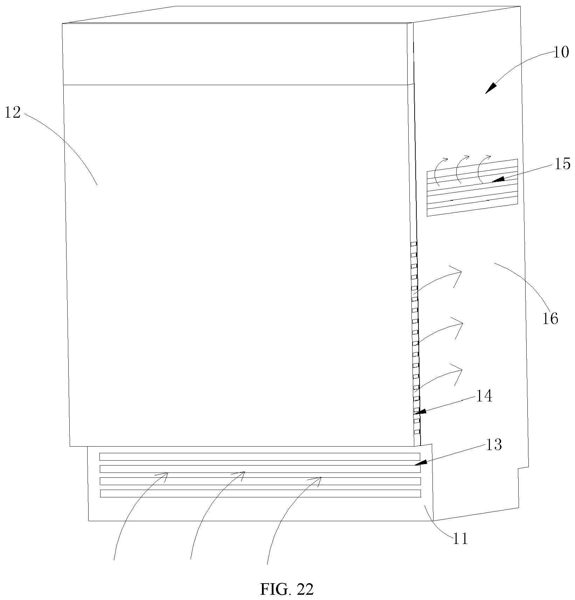

Referring to FIG. 22, in some embodiments, the housing 10 includes a lateral plate 16, the second opening 13 is provided on the left and/or right side of the door body 12, and the lateral plate 16 is provided with the third opening 15 that serves as the air inlet 21 or the air outlet 22.

In an embodiment shown in FIG. 22, the first opening 13 serves as the air inlet 21, and the second opening 14 and the third opening 15 serve as the air outlets 22. In this way, it is possible to effectively avoid the backflow of the exhausted wind when the heat pump system 30 is working, and improve the heat exchange efficiency of the heat pump system 30. Meanwhile, the second opening 14 is provided on the left and/or right side of the door body 12, and the third opening 15 is provided on the lateral plate 16. When the second opening 14 and the third opening 15 serve as the air outlets 22, air is discharged from a lateral side of the door and a lateral side of the housing 10, preventing the exhausted wind from degrading the user experience. In this embodiment, the air ducts of the air duct system 20 may also be connected in parallel, as shown in FIG. 19 or FIG. 20. It can be appreciated that this embodiment also corresponds to the above situation (5). In other words, in this embodiment, the air inlet 21 and the air outlet 22 are located on different sides of the housing 10. Specifically, in this embodiment, there are two air outlets 22, the air inlet 21 is located on the front plate 11, one of the two air outlets 22 is located on the right side of the door body 12, and the other air outlet 22 is located on the lateral plate 16 of the housing 10.

It can be appreciated that, in such an embodiment, the air velocity of the air outlet 22 can also be set to be greater than the air velocity of the air inlet 21. In this way, the outflow wind speed is greater than the inflow wind speed to realize powerful exhaust, which can further avoid the backflow of the exhausted wind, thus improving the heat exchange efficiency of the second heat exchanger 34 and ensuring the performance of the washing appliance 100. At this time, this embodiment is basically the same as the embodiment of the above situation (2).

It can be appreciated that, in some embodiments, the first opening 13 and the third opening 15 may also be used as the air inlets 21, and the second opening 14 may be used as the air outlet 22; or the first opening 13 and the second opening 14 serve as the air inlets 21, and the third opening 15 serves as the air outlet 22, which can be specifically determined according to actual conditions and will not be limited here.

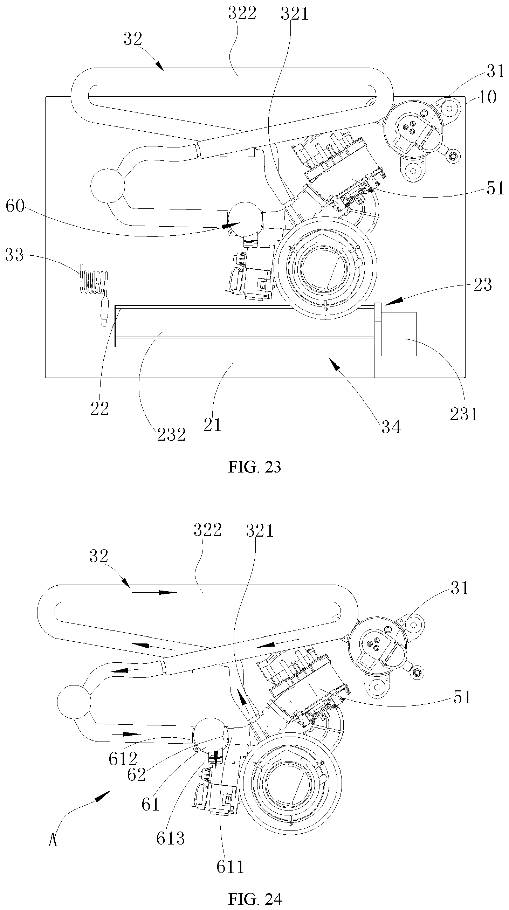

Referring to FIGS. 13 and 23, in some embodiments, the first heat exchanger 32 includes a first delivery pipe 321 and a second delivery pipe 322. The first delivery pipe 321 is thermally connected to the second delivery pipe 322. The first delivery pipe 321 is used to transport a washing liquid, and the second delivery pipe 322 is used to transport a refrigerant medium.

In this way, the washing liquid and the refrigerant medium can exchange heat in the first heat exchanger 32, to heat the washing liquid and transport it to a spray arm assembly 52.

In some embodiments, the second delivery pipe 322 is fitted over the first delivery pipe 321, and a flow direction of the washing liquid in the first delivery pipe 321 is opposite to a flow direction of the refrigerant medium in the second delivery pipe 322. In this way, the first delivery pipe 321 and the second delivery pipe 322 form a pipe-in-pipe structure, which can improve the heat exchange efficiency. The opposite flow directions of the washing liquid in the first delivery pipe 321 and the refrigerant medium in the second delivery pipe 322 can further improve the heat exchange efficiency.

It should be noted that the flow direction of the washing liquid in the first delivery pipe 321 can also be the same as the flow direction of the refrigerant medium in the second delivery pipe 322, which can be set according to specific conditions.

In some embodiments, the washing appliance 100 further includes an inner container 40, a spray system 50, and a switching device 60. The inner container 40 is located in the housing 10 and defines a washing chamber in the inner container 40. The spray system 50 includes a washing pump 51 and a spray arm assembly 52, and the spray arm assembly 52 is located in the washing chamber. The washing pump 51 is used to suck the washing liquid in the washing chamber and spray it into the washing chamber through the spray arm assembly 52. The switching device 60 is connected to the washing pump 51, the spray arm assembly 52, and the first heat exchanger 32. The switching device 60 is configured to determine whether the first delivery pipe 321 is connected to a washing liquid pipeline between the washing pump 51 and the spray arm assembly 52.

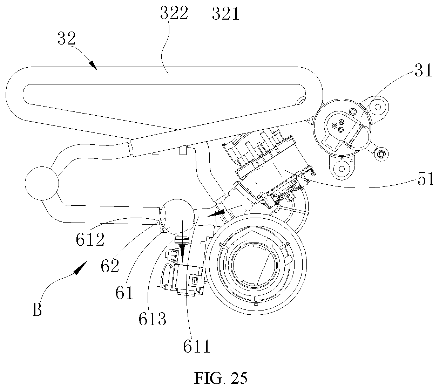

In the washing appliance 100 according to this embodiment, when the washing liquid needs to be heated, the switching device 60 can switch the first delivery pipe 321 to be connected to the washing liquid pipeline between the washing pump 51 and the spray arm assembly 52, so that the washing liquid can pass through the first delivery pipe 321 and realize heat exchange with the refrigerant medium in the second delivery pipe 322, and then the heated washing liquid can be sprayed out through the spray arm assembly 52 under the drive of the washing pump 51 (as shown in FIG. 24). When the washing liquid does not need to be heated, the switching device 60 can switch the first delivery pipe 321 not to be connected to the washing liquid pipeline between the washing pump 51 and the spray arm assembly 52, so that the washing liquid does not need passing through the first delivery pipe 321, and the washing liquid flows from the washing pump 51 to the spray arm assembly 52 through the switching device 60 (as shown in FIG. 25), which can shorten a flow path of the washing liquid, optimize a water system of the washing appliance 100, reduce water consumption, and save energy.

In some embodiments, the switching device 60 includes a valve body 61 and a toggling piece 62. The toggling piece 62 can move in the valve body 61, and switch between different positions in the valve body 61 to determine whether the first delivery pipe 321 is connected to the washing liquid pipeline between the washing pump 51 and the spray arm assembly 52.

Specifically, the valve body 61 includes a first port 611, a second port 612, and a third port 613. The first port 611 is connected to the washing pump 51 by a pipeline, the second port 612 is connected to the first delivery pipe 321 by a pipeline, and the third port 613 is connected to the spray arm assembly 52 by a pipeline. Referring to FIGS. 11 and 12, the toggling piece 62 can be switched between a first position A and a second position B to determine whether the first delivery pipe 321 is connected to the washing liquid pipeline between the washing pump 51 and the spray arm assembly 52. When the toggling piece 62 is in the first position A (as shown in FIG. 24, an arrow indicates a flow direction of the washing liquid), the first port 611 is blocked by the toggling piece 62, the second port 612 is opened by the toggling piece 62, and the second port 612 is in communication with the third port 613. Hence, the first delivery pipe 321 is connected to the washing pump 51, and the washing liquid pipeline is established between the washing pump 51, the first delivery pipe 321, and the spray arm assembly 52. When the toggling piece 62 is in the second position B (as shown in FIG. 25, an arrow indicates a flow direction of the washing liquid), the second port 612 is blocked by the toggling piece 62, the first port 611 is opened by the toggling piece 62, and the first port 611 is in communication with the third port 613. Hence, the first delivery pipe 321 is not connected to the washing liquid pipeline between the washing pump 51 and the spray arm assembly 52, and the washing liquid pipeline is established only between the washing pump 51 and the spray arm assembly 52.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

The present disclosure provides many different embodiments or examples to implement different structures of the present disclosure. To simplify the present disclosure, components and settings of specific examples are described herein, but they are only examples and are not intended to limit the present disclosure. In addition, the present disclosure may repeat reference numerals and/or reference letters in different examples. Such repetition is for the purpose of simplification and clarity and does not indicate the relationship between various implementations and/or settings discussed. Moreover, the present disclosure provides examples of various particular processes and materials, but those skilled in the art may conceive the application of other processes and/or the use of other materials.

In the description of the present specification, reference throughout this specification to "an embodiment," "some embodiments," "an exemplary embodiment," "an example," "a specific example," "some examples" or the like means that a particular feature, structure, material, or characteristic described in connection with the embodiment or example is included in at least one embodiment or example of the present disclosure. In the specification, the appearances of the above-mentioned terms are not necessarily referring to the same embodiment or example. Furthermore, the particular features, structures, materials, or characteristics described can be combined in any suitable manner in one or more embodiments or examples.

Although embodiments of the present disclosure have been shown and described, it shall be appreciated by those skilled in the art that various changes, modifications, alternatives, and variations can be made in these embodiments without departing from principles and purposes of the present disclosure. The scope of the present disclosure is defined by claims and the equivalent thereof.

## Claims

1. A washing appliance, comprising:
a housing;
an air duct system arranged within the housing, and comprising an air inlet and an air outlet that are arranged in the housing; and
a heat pump system comprising a compressor, a first heat exchanger, a throttling device, and a second heat exchanger sequentially connected to form a closed refrigerant circuit, wherein the first heat exchanger is configured to conduct heat exchange with a washing liquid of the washing appliance, the second heat exchanger is located within the air duct system, the air duct system is provided with a fan configured to accelerate an air flow for heat exchange between the air duct system and the second heat exchanger;
wherein the air duct system is configured to satisfy at least one of the following conditions:
an air velocity of the air outlet is greater than an air velocity of the air inlet;
the air inlet and the air outlet are arranged on different sides of the housing;
the air inlet and the air outlet are arranged on a same side of the housing.

2. The washing appliance according to claim 1, wherein the housing comprises a front plate, and the air inlet and the air outlet are both arranged in a lower portion of the front plate.

3. The washing appliance according to claim 1, wherein the housing comprises a front plate and a door body located above the front plate, the front plate and the door body are located on a same side of the housing, the front plate is provided with a first opening and a second opening, and a left side and/or a right side of the door body is provided with a third opening;
the first opening serves as the air inlet, while the second opening and the third opening serve as air outlets; or the first opening and the third opening serve as air inlets, while the second opening serves as the air outlet.

4. The washing appliance according to claim 1, wherein the housing comprises a front plate and a door body located above the front plate, the front plate and the door body are located on a same side of the housing, the front plate is provided with a first opening and a second opening, and a front side of the door body is provided with a third opening;
the first opening serves as the air inlet, while the second opening and the third opening serve as air outlets; or the first opening and the third opening serve as air inlets, while the second opening serves as the air outlet.

5. The washing appliance according to claim 4, wherein a left side and/or a right side of the door body is provided with a fourth opening that serves as the air inlet or the air outlet.

6. The washing appliance according to claim 1, wherein the housing comprises a front plate and a door body located above the front plate, and the front plate and the door body are located on a same side of the housing;
the front plate is provided with a first opening, and the door body is provided with a second opening; the first opening serves as the air inlet, while the second opening serves as the air outlet; or the first opening serves as the air outlet, while the second opening serves as the air inlet.

7. The washing appliance according to claim 6, wherein the second opening is arranged on a left side and/or a right side of the door body.

8. The washing appliance according to claim 6, wherein the second opening is arranged on a front side of the door body, and a distance between the second opening and the first opening is greater than a predetermined distance.

9. The washing appliance according to claim 6, wherein the second opening is arranged on a front side of the door body, a distance between the second opening and the first opening is less than a predetermined distance, and the air velocity of the air outlet is greater than the air velocity of the air inlet.

10. The washing appliance according to claim 6, wherein the second opening is arranged on a left side and/or a right side of the door body, a front side of the door body is provided with a third opening, a distance between the third opening and the first opening is greater than a predetermined distance, and the third opening serves as the air inlet or the air outlet.

11. The washing appliance according to claim 6, wherein the housing comprises a lateral plate, the second opening is arranged on a left side and/or a right side of the door body, and the lateral plate is provided with a third opening that serves as the air inlet or the air outlet.

12. The washing appliance according to claim 1, wherein the first heat exchanger comprises a first delivery pipe and a second delivery pipe thermally connected to the first delivery pipe, the first delivery pipe is configured to transport the washing liquid, and the second delivery pipe is configured to transport a refrigerant medium.

13. The washing appliance according to claim 12, comprising:
an inner container located within the housing and defining a washing chamber in the inner container;
a spray system comprising a washing pump and a spray arm assembly located in the washing chamber, the washing pump being configured to suck the washing liquid in the washing chamber and spray the washing liquid into the washing chamber through the spray arm assembly; and
a switching device connected to the washing pump, the spray arm assembly, and the first heat exchanger, and configured to determine whether the first delivery pipe is connected to a washing liquid pipeline between the washing pump and the spray arm assembly.

14. The washing appliance according to claim 13, wherein the switching device comprises a valve body and a toggling piece movably arranged within the valve body, the toggling piece switches between different positions in the valve body to determine whether the first delivery pipe is connected to the washing liquid pipeline between the washing pump and the spray arm assembly.

15. The washing appliance according to claim 14, wherein the valve body comprises a first port connected to the washing pump, a second port connected to the first delivery pipe, and a third port connected to the spray arm assembly;
the toggling piece is switchable between a first position and a second position;
when the toggling piece is in the first position, the first port is blocked by the toggling piece, the second port is opened by the toggling piece and is in communication with the third port, and the first delivery pipe is connected to the washing pump;
when the toggling piece is in the second position, the second port is blocked by the toggling piece, the first port is opened by the toggling piece and is in communication with the third port, and the first delivery pipe is not connected to the washing liquid pipeline between the washing pump and the spray arm assembly.

16. The washing appliance according to claim 12, wherein the second delivery pipe is fitted over the first delivery pipe, and a flow direction of the washing liquid in the first delivery pipe is opposite to a flow direction of the refrigerant medium in the second delivery pipe.
